Europäisches Patentamt

European Patent Office

Office européen des brevets

(11) Publication number: **0 031 446**
**B1**

## EUROPEAN PATENT SPECIFICATION

(45) Date of publication of patent specification: **19.02.86**

(21) Application number: **80107212.5**

(22) Date of filing: **20.11.80**

(51) Int. Cl.⁴: **B 41 J 5/46,** G 06 F 15/20, B 41 J 7/90

(54) Multi-character display controller for text recorder.

(30) Priority: **26.12.79 US 107467**

(43) Date of publication of application:
**08.07.81 Bulletin 81/27**

(45) Publication of the grant of the patent:
**19.02.86 Bulletin 86/08**

(84) Designated Contracting States:
**DE FR GB IT**

(56) References cited:
**GB-A-2 016 771**
**GB-A-2 021 834**
**US-A-2 717 686**

(73) Proprietor: **International Business Machines Corporation**
**Old Orchard Road**
**Armonk, N.Y. 10504 (US)**

(72) Inventor: **Hanft, Roy Francis**
**609 Beechmont Road**
**Lexington Kentucky 40502 (US)**
Inventor: **Pechanek, Gerald George**
**4121 Vancouver Court**
**Lexington Kentucky 40503 (US)**

(74) Representative: **Siccardi, Louis**
**Compagnie IBM France Département de Propriété Industrielle**
**F-06610 La Gaude (FR)**

Courier Press, Leamington Spa, England.

## Description

### Field of the Invention

The present invention deals with improvements in text recorders, i.e., typewriters or typewriter-like devices which may produce printed output, output in the form of a CRT display or the like, or both.

### Background of the Invention

The key arrangement of the conventional type keyboard has been in use for many years, and has remained unchanged notwithstanding a variety of suggestions for rearranging the keyboard to increase the keystroking efficiency or reduce the burden on the keyboard operator. The conventional key arrangement is sometimes referred to as QWERTY, representing the first five letters in the uppermost row of alphabetic characters.

Many of the suggestions, which involve rearranging the keyboard arrangement, have fallen by the wayside for the simple reasons that such a rearranged keyboard would be unfamiliar to the large population of keyboard operators and therefore represent an additional burden to those operators in "learning" a new keyboard.

Other suggestions have involved adding one or more different "control" keys so as to enable encoding different character or character combinations with respect to a number of the keys. A big disadvantage in suggestions of this sort is a substantial amount of retraining required in order for an operator to effectively use the additional coding levels provided by the "control" keys.

For example, the document US—A— 1 275 657 suggested adding additional keys to the conventional keyboard, each of which, when depressed, would enable the printing of a word or phrase. The document US—P— 2 717 686 suggested using standard keys for phrase or word printing when an additional key or footpedal was simultaneously actuated. In the absence of depression of the additional key or footpedal, a single character or symbol is printed. This document also disclosed that by providing a plurality of such special keys, the word or phrase printing capacity could be multiplied. The document US—P— 3 289 804 disclosed an extension of the well-known IBM "Selectric" typewriter which employed a wholly conventional keyboard. However, when selected ones of the keys were depressed beyond normal depression distance, the machine simulated the result of depression of specific key sequence, i.e., a specific alpha sequence, function sequence, numeric sequence or a mixed sequence.

The present invention seeks to improve on this prior art by providing a text recorder which enables improved keyboard efficiency for an operator by reducing the number of input strokes required during text typing. The term text recorder, in the present application, has reference to conventional typewriters, i.e., those producing a printed output via impact printing or otherwise, or typewriter-like devices which produce a text display employing a CRT or equivalent techniques, or devices capable of both types of outputs.

An apparatus which enables keyboard efficiency for an operator by reducing the number of input strokes required during text typing is disclosed in the document EP—0043816. The latter, however, although claiming a priority date earlier than the priority date of the present invention, was published only after that date. Accordingly it constitutes a prior art only within the scope of Art. 54(3) and 56 of the EPC.

This document discloses a keyboard-operable printer having a keyboard producing a different signal for each of its keys, a printer connected to the keyboard and responsive to each different signal to print an appropriate item, and a data storage and recall facility which is connected to receive signals from the keyboard and to transmit signals to the printer. The data storage and recall facility is programmable and a control is provided for placing the facility in respective states of production, and non-production of signals. When in the signal producing state, one or more signals received from the keyboard may serve as instructions to the facility to produce one or more signals which are fed to the printer, such that desired set-pieces of information may be printed without requiring manual insertion into the keyboard.

This document does not disclose the structure details of the data storage and recall facility nor does it disclose the elements which are necessary to control the exchange of information between the keyboard, the storage and the printer.

Frequency of word usage studies show that half of all communications in English are accomplished with less than 100 different words; every fourth word is among the 10—12 most common words in the written language, and two or three words make up about 10% of all communication. English is not unique in this usage of redundant words, indeed, this characteristic is found in the rest of the major languages. It is therefore an object of the present invention to improve keyboard efficiency by providing a practical and usable text recorder wherein many of these common words can be encoded and printed or displayed, with a single stroke. Reduction in keystroke effort is not limited to writing complete words from a single keystroke, indeed, it is also important to provide for commonly used syllables.

In accordance with one aspect of the invention, words or syllables are associated with those conventional keys in the keyboard which are infrequently used during text typing applications. In a normal mode of operation, the text recorder produces a conventional output, however, in a multicharacter mode, the text recorder produces a word or syllable when the associated key is stroked. One large group of such keys are numeric keys. In order to expand the number of words or syllables comprising multiple characters which can be recorded with a single keystroke, each of the numeric keys can be associated both with a word and with a suffix if it is realized that words are called for after functions such as a space function or carriage return, and suffixes are only called for when preceded by an alphabetic character or a hyphen. Thus, stroking a single one of the numeric keys can produce, in a normal mode of operation, the recording of the associated numeral and in a multicharacter mode, the recording of a suffix, if preceded by an alphabetic character or hyphen, or recording of an entire word if preceded by a keyboard function such as a space carriage return operation. In addition to the numeric keys, the punctuation marks and other miscellaneous or graphic symbols on the conventional typewriter keyboard can similarly be employed. Further expansion of this capability can be achieved by providing for commonly used multiple word phrases, such as the phrases: "will be"; "and the"; "for the"; "in the"; "of the"; "from the". This is effected by associating each of the keys arranged to produce the words: "will"; "and"; "for"; "in"; "of"; "from" — with a second character sequence representing: space "be"; space "the"; space "the"; space "the"; space "the": space "the" —. On the first actuation of the associated key in the multi-character mode, the text recorder produces the first word of the phrase, the second sequential actuation of the identical key produces the second sequence.

To further enhance the effectiveness of additional equipment required to provide the above-mentioned features, the codes representative of words or syllables produced in response to a single keystroke can be stored, and by providing a response to a shift or shift lock status, the first character in the sequence can be capitalized, a preselected character(s) in the sequence can be capitalized, or the entire sequence can be capitalized.

In accordance with another feature of the invention, when in a multi-character mode, actuation of any of the punctuation marks results in automatic production of a space function following the punctuation mark.

Summary of the Invention

The invention meets the above-stated objects and provides features referenced above by providing a multi-character display controller for use in a text recorder of the kind having:

a text display means for displaying one or more characters in a sequence, determined by the operator,

keyboard means including a plurality of keys each producing a coded signal representing said key when actuated by an operator, and,

· decoder means for receiving coded signals from said keyboard means and for supplying corresponding drive signals for at least some of said keys to said text display means, said multi-character display controller including:

mode means for producing a mode signal and for changing an operating mode of the text recorder from a normal mode to a multi-character mode or from said multi-character mode to said normal mode when actuated by an operator,

first means responsive to said mode signal in a multi-character mode state for nullifying the normal response of said decoder means to at least a subset of said coded signals,

auxiliary decoder means and storage means associated with said auxiliary decoder means, said storage means retrievably storing signals representing preselected character sequences at locations corresponding to respective coded signals of said subset, said auxiliary decoder means responsive to said mode signal in a multi-character mode state and to said storage means for supplying to said text display means drive signals representing a preselected character sequence corresponding to that defined by signals read from said storage means; wherein

said decoder means includes a function storage means for correlating at least some of said coded signals with associated drive signals,

said storage means includes:

first storage means addressed by said coded signals including an entry for at least each of said coded signals in said subset,

counter means responsive to said first memory means for storing signals representing said entry,

second storage means addressed by said counter means including an entry for each of said coded signals in said subset, a first sub-entry located at a location designated by an entry from said first storage means, each said entry including a stop code as a final sub-entry,

control means responsive to said second storage means for incrementing said counter means each time an output is produced by said second storage means, said control means responsive to a stop code read from said second storage means for inhibiting further incrementing of said counter means, said auxiliary decoder means including means for supplying outputs from said second storage means to address said function storage means.

Brief Description of the Drawings

Several preferred embodiments of the invention will be disclosed in connection with the following portions of the specification when taken in conjunction with the attached drawings in which the like reference characters identify identical apparatus and in which:

Figure 1 is a block diagram of a character display device corresponding to the state of the prior art;

Figure 2 illustrates the layout of the keyboard or input device for the text recorder of the present invention;

Figure 3 is a block diagram of one preferred embodiment of the invention;

Figures 4A and 4B illustrate memory layouts for the start address storage and the character sequence storage of Figure 3;

Figure 5 is a block diagram of a second preferred embodiment of the invention which is a modification of the first preferred embodiment;

Figures 6A and 6B illustrate typical memory layouts for the start address storage and character sequence storage of Figure 5;

Figure 7 is a block diagram of a third preferred embodiment of the invention incorporating a microprocessor with architecture similar to IBM Model 75;

Figure 8 and 9 are flow diagrams illustrating the processing routines carried out by the microprocessor of Figure 7; and

Figure 10 and 11 are detailed block diagrams of components of Figures 3 and 5.

Detailed Description of Preferred
Embodiments

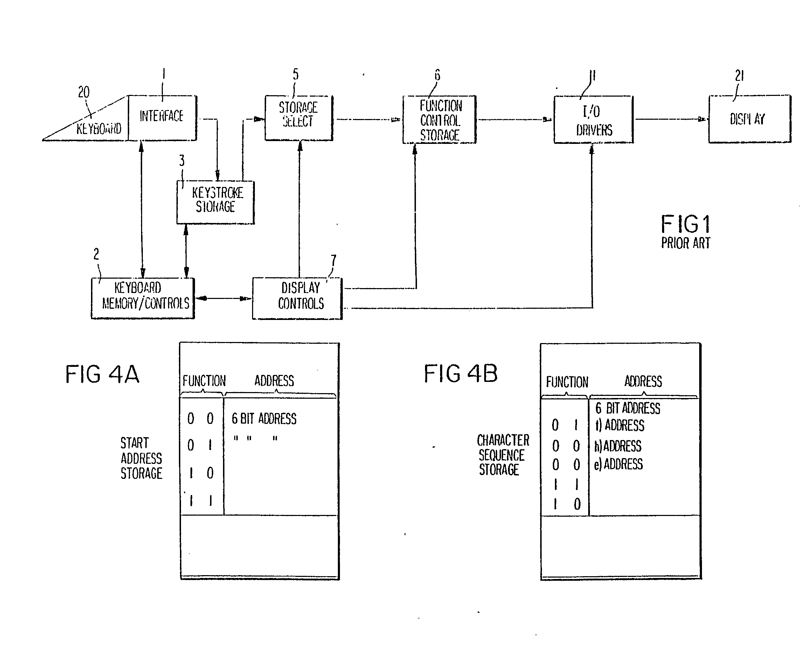

Figure 1 is a block diagram of a prior art text recorder. As shown in Figure 1, input is provided to the text recorder through a keyboard 20, which may be a conventional keyboard i.e., QWERTY. The keyboard 20 and interface 1 can include any conventional apparatus for producing coded signal representations which are unique to each of the plurality of keys contained therein. Such conventional devices operate on electromechanical or solely electrical principles, and typical examples are disclosed in the document US—A— 3 630 336.

The coded signals representations are available from interface 1 at a keystroke storage 3 and from the storage 3 at a storage select unit 5. The keystroke storage 3 is merely a buffer which is arranged to store coded signal representations resulting from the depression of at least one key, and typically, a plurality of keys, although usually the keystroke storage 3 is arranged to store at most the number of keystroke corresponding to an entire line of type. The buffers for use in the keystroke storage 3 are well known to those skilled in the art.

The keyboard/memory controls 2 include at least a pair of counters for reasons which will be explained hereinafter. As each different set of coded signal representations is provided by keyboard interface 1, one of the counters is incremented so that each coded signal representation produced by the keyboard interface 1 can be stored in sequential locations in keystroke storage 3.

When a coded signal representation is available in the keystroke storage 3 for input, the keyboard/-memory controls 2 provide an output request to display control 7. When such an output request has been received, the display control 7 enables the storage select network 5 to address the function control storage 6, using as an address one of the coded signal representations stored in the keystroke storage 3. The function control storage 6 is a memory device for the purpose of translating the coded signal representations produced by the keyboard 20 and interface 1 into necessary drive signals to provide the desired display. Therefore, when addressed by the coded signal representation initially stored in the keystroke storage 3 and enabled by display control 7, the function control storage 6 produces at an output a representation of the necessary drive signals to produce the desired display.

The display control 7 allows the driver I/O unit 11, which merely comprises a plurality of amplifiers, to output the signals produced by the function control storage 6 to the display 21. When this operation is completed, and assuming another output request is pending, the display control 7 can move onto the next coded signal representation in the keystroke storage 3. To effect this, the keyboard/memory controls 2 include a second counter which is incremented upon completion of an output function of the display control 7. Using the pair of address counters in the keyboard/memory controls 2 enables the text recorder to buffer input and output functions, while at the same time, insuring the signals in the keystroke storage 3 produce output display in the proper sequence.

The display 21 may comprise a conventional impact printer, ink jet printer, or cathode ray tube or equivalent device for producing a graphic representation of an alphabetic character, a numeric character, a symbol or function, all corresponding to respective key actuations originally iniated at the keyboard 20. The manner in which the specific display is produced in response to appropriate drive signals and the instrumentations used are well-known to those skilled in the art.

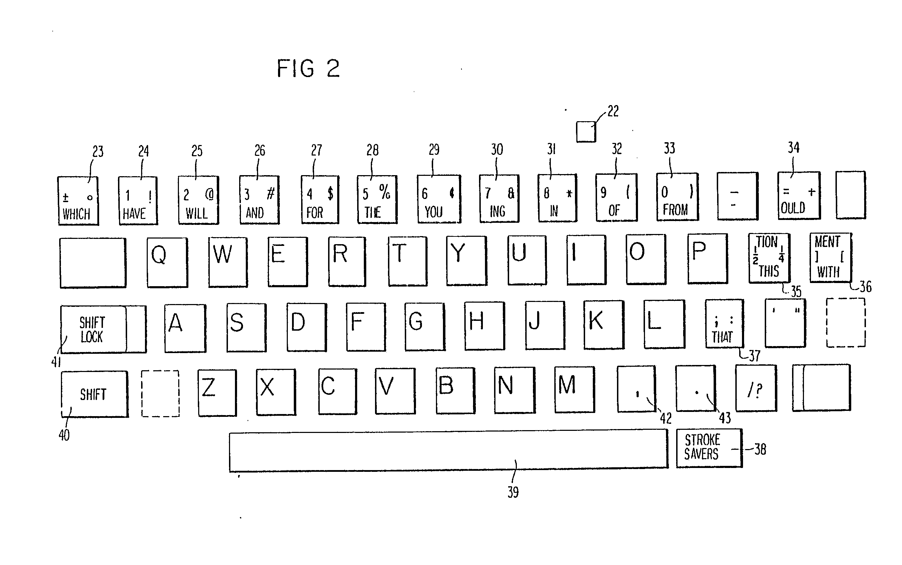

Figure 2 is an example of the keyboard constructed in accordance with the present invention. As shown in Figure 2, the conventional typewriter keys corresponding to the alphabetic characters are included in a conventional layout; those alphabetic keys carry no reference characters in Figure 2. However, in addition to the conventional keyboard, and adjacent to the space bar 9, a stroke saver key 38 has been added, the function of which will be explained hereinafter. In addition, the numeric keys, i.e., keys 23—24, carry the conventional numeric character as well as the conventional symbol which is produced when a key is actuated in the simultaneous presence of a shift or shift lock function. In addition, the same keys carry indicia representing a multi-character sequence, either a whole word or a syllable of a whole word. In addition, several keys which, in a conventional typewriter, carry only punctuation marks or other symbols such as keys 35—37 also carry one or more multi-character sequences; the function of these keys will also be explained hereinafter. In addition, as is conventional, the keyboard includes a shift key 40 and a shift lock key 41. Finally, on the keyboard or in close proximity thereto, an indicator 22 is provided which can be used to allow feedback to the operator identifying the mode in which the text recorder is operating, either in a conventional mode or in a multi-character mode. The indicator 22 can, for example, comprise a light emitting diode or other visible output emitting device the energization of which will be discussed hereinafter.

In accordance with an embodiment of the invention, the text recorder with the keyboard 20 shown in Figure 2 will produce the expected output on operator actuation of one of the keys when the text recorder is operating in the normal mode. The term conventional output refers to that output, i.e., character, symbol or function printed or displayed, which the operator would expect from operating a conventional keyboard. However, actuation of the stroke saver key 38 places the text recorder in a multi-character mode; this mode is indicated to the operator by the energization of the indicator 22. Actuation of key 23, when in multi-character mode, will result in display of the multi-character sequence "which"; similarly, actuation of any of the keys 24—34 in the multi-character mode will result in the display of the multi-character sequences associated with the key. Actuation of either of the keys 35 or 36 in the multi-character mode will result in output of one or the other of the multi-character sequences associated with the key depending upon the previously stroked key. Actuation of key 37, when in the multi-character mode, will result in the output of either a multi-character sequence associated with that key ("that") or the punctuation graphic, depending on the previously stroked key. As will be explained hereinafter, the multi-character sequence emitted by the text recorder in the multi-character mode may be entirely lower case format, or either selected character(s) or the entire sequence may be displayed in upper case format on appropriate actuation of either the shift key 40 or shift lock key 41.

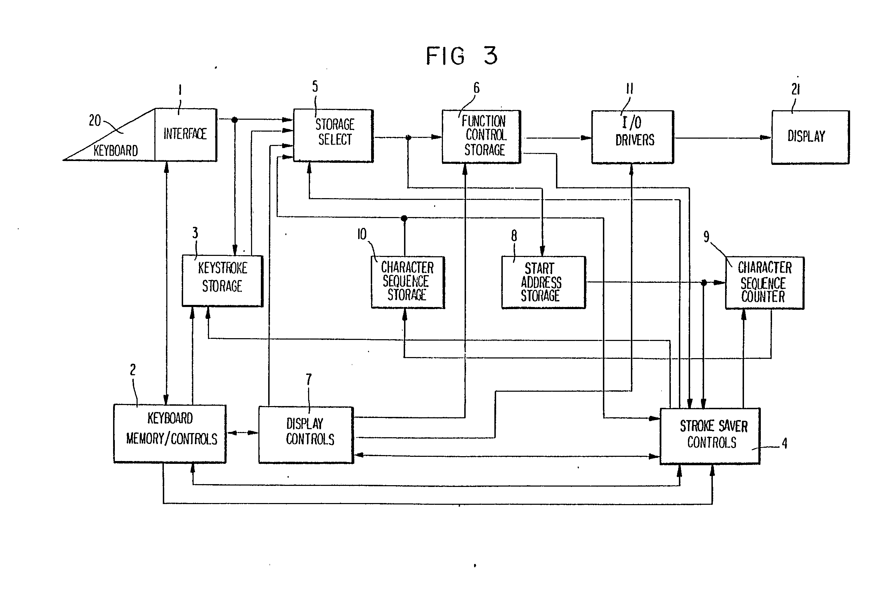

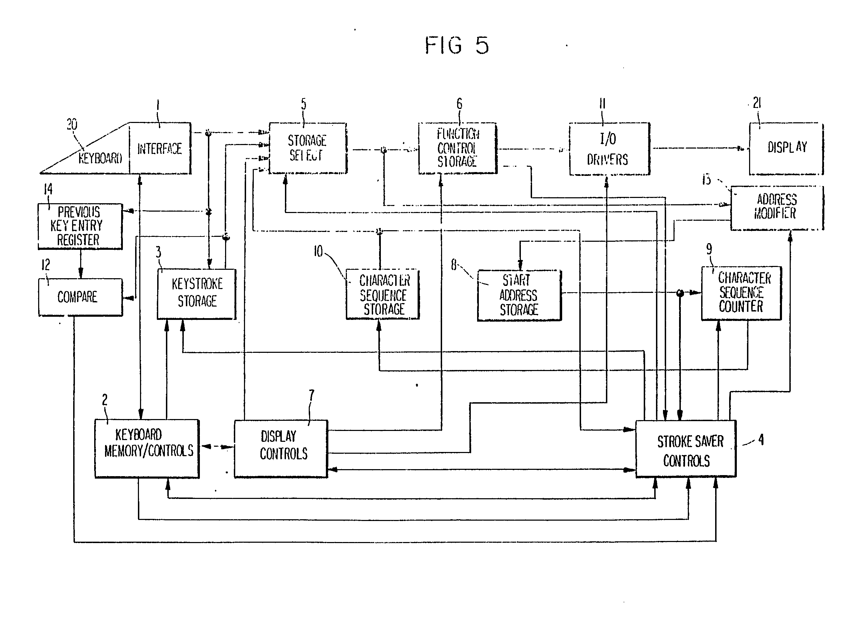

As has been mentioned, actuation of any of the keys shown in the keyboard of Figure 2 results in the production of a coded signal representing the particular key. However, since the desired subject matter to be recorded may be different depending upon the operating mode in which the text recorder is operating, and may also be different depending upon the preceding key actuation, the manner in which the text recorder functions will now be explained in connection with Figure 3 and 4.

Figure 3 comprises a block diagram of one embodiment of the inventive text recorder apparatus. As shown in Figure 3, a stroke saver control 4, start address storage 8, character sequence counter 9, and character sequence storage 10 have been added. The stroke saver control 4 responds to status signals from the keyboard/memory controls 2; these signals are used to control the states of the shift and shift lock status as well as normal or multi-character mode signals. In addition, the stroke saver control 4 also responds to an output of the function control storage 6, the display control 7, the start address storage 8 and the character sequence storage 10. In turn, the stroke saver control 4 may pass control signals to the keyboard/memory controls 2, enable the storage select 5, enable or inhibit the display control 7 and cause the loading of or incrementing the character sequence counter 9.

In addition, the data path from the keyboard interface 1 to the keystroke storage 3 has been modified so that keystroke encoded signals can only reach the keyboard storage 3 when allowed by the keyboard/memory controls 2.

The start address storage 8 includes, for each key designed to operate in a multi-character mode, a start address (or pointer) which refers to the character sequence storage 10. Character sequence storage 10 includes, at the address stored in the start address storage 8, a pointer to a representation of the drive signal to produce the first character or function called for by the key actuation in the multi-character mode which drive signal is stored in function control storage 6. Following that location, the character sequence storage 10 includes, in sequence, a pointer to each other representation of each other drive signal for a character or function which is included in the multi-character sequence. Finally, each sequence in the character sequence storage 10 concludes with an end code to indicate to the stroke saver control 4 that the entire desired multi-character sequence has been completed.

The apparatus shown in Figure 3 will, in the multi-character mode, produce the multi-character sequence associated with each of keys 23—24. In addition, the multi-character sequence can be output in lower case format, or if the shift key 40 is depressed, selected character(s) in the sequence, for example, the first, will be output in upper case format, whereas the remaining character will be output in lower case format. Finally, if the shift lock key 41 is engaged, the entire sequence will be output in upper case format.

Modifying the apparatus of Figure 1 to operate in the multi-character mode, in accordance with the showing in Figure 3, requires the addition of two storage devices, i.e., the start address storage 8 and the character sequence storage 10, a counter, the character sequence counter 9, and the stroke saver control 4 which includes a mode latch and a pair of latches, one for shift status and another for shift lock status. In addition, an input to the storage select 5 is provided from the character sequence storage. In addition, an input to the display control 7 is provided from the stroke saver control 4 so as to inhibit normal operation of the display control 7 at certain times in the multi-character mode. An additional output from the function control storage 6 is provided to the stroke saver control 4 for purposes which will be explained hereinafter.

The start address storage 8 is laid out in accordance with the illustration in Figure 4A, i.e., each particular storage location provides multi-bit storage, two bits of which represent function codes and the remaining bits, for example, 6 bits, correspond to an address in the character sequence storage 10. Two different function codes are employed in the start address storage, a first function code, for example 00, designates a normal key, i.e., one that is not associated with any multi-character sequence in a multi-character mode, and a different code, for example 01, designating a stroke saver key, i.e., one that does correspond to a multi-character sequence in a multi-character mode of operation.

Figure 4B illustrates the layout of the character sequence storage 10 which also provides multi-bit entry for each address. Each multi-bit entry includes an address corresponding to a single character, symbol or function, designating the location in the function control storage 6, wherein the drive signals representing that character, symbol or function may be located. Each entry in the character sequence storage 10 also includes a multi-bit function code. One particular code, for example 11, designates an end of entry, the use of which will be discussed hereinafter. Other function codes relate to capitalization control. In particular, a second function code, for example 00, designates a lower case character, and a different function code, for example 01, designates a potential upper case character. For the example shown in Figure 4B, the first entry in the storage identifies the address in function control storage 6, the output of which will produce the drive signals necessary to produce the alphabetic character "t" and the associated function storage indicates a potential upper case character. This will be displayed in upper case depending upon the shift status. The next two entries are, respectively, addresses for alphabetic characters "h" and "e" and the associated function code indicates both are lower case characters.

Three of the significant factors with which the stroke saver control 4 is concerned are the mode, i.e., normal and multi-character, and the status of the two shift latches. The stroke saver control 4 includes a latch for each one of the factors. Actuation of key 38 (the stroke saver key), key 40 (the shift key), or the key 41 (the shift lock key) results in the keyboard 20 producing a unique code identifying the actuated key. In processing this key actuation, the code is coupled from the interface 1 to the storage select 5 which addresses the function control storage 6. The output of function control 6 is coupled to the stroke saver control 4, and depending upon which key was actuated, the condition of the stroke save control latches may be changed. For example, if the stroke saver key 38 is depressed, the status of the mode latch is changed from normal to multi-character or vice versa. In a similar fashion, the shift lock and shift latches in the stroke saver control 4 track the status of the associated keys.

Processing for any of the other keys begins in a similar fashion, i.e., the key actuation results in the keyboard interface 1 creating a code unique to the actuated key. This is coupled to the storage select 5 which addresses the function control storage 6. The corresponding output of the function control storage 6 is coupled to the stroke saver control 4. At this point, the stroke saver control 4 determines whether or not to store the corresponding key code in keystroke storage 3. Keyboard memory control 2 monitors the status of the address counters and, assuming storage space is available, the key code is stored, along with the status of the shift and shift lock latches. Once stored, the keyboard/memory controls 2 issue a display request to the display control 7, since there is a stored keyboard storage awaiting display. The display request issued by the keyboard/memory controls 2 allows the display control 7 to enable the storage select circuit 5 to respond to the now-stored key code in the storage unit 3. The storage select 5 employs the stored key code to address the function control 6 and the start address storage 8. Outputs for both functon control storage 6 and start address storage 8 are decoded in the stroke saver control 4. By monitoring the function code associated with the start address storage entry, stroke saver control 4 determines that a key is or is not a multi-character mode key; if it is, normal display processing may be inhibited by the stroke saver control 4 dependent on the mode which is reflected in stroke saver control 4 in the form of the mode latch. Instead of normal display processing, the stroke saver control 4 can effect a substitution for the character associated with the key code with a sequence of characters or characters and functions, as will now be explained.

The first entry address in the start address storage 8 is loaded into the character sequence counter 9 where it is used to address the character sequence storage 10. Stored at the addressed location of the character sequence storage 10 is the address of a location in function control storage 6 corresponding to the first character in the desired multi-character sequence. Stroke saver control 4 enables the output of the character sequence storage 10 to address the function control storage 6 through storage select 5. As a result, function control storage 6 outputs the necessary drive signals for display of the first character. Display of this character is effected in upper or lower case, dependent upon the shift and shift lock status bits and the character capital decode from the character sequence storage.

Before conclusion of the print cycle or the display cycle, the stroke saver control 4 increments the character sequence counter 9 and thus, a new location in character sequence storage 10 is addressed. The stroke saver control 4 examines the associated function code to determine whether a stop code has been detected. Assuming it is not, a similar sequence is enabled wherein the character sequence storage entry is employed as an address in the function control storage 6 to produce the drive signal necessary to produce the next character. This operation continues until incrementing the character sequence counter 9 results in addressing a location in character sequence storage 10 whose associated function control represents a stop code. At detection of the stop code at the stroke saver control 4, the incrementing of the character sequence counter 9 is terminated and this allows the next key code stored in the key stroke storage 3 to be used for output purposes.

Because of the buffered operation between the input and output, i.e., keyboard interface 1 and keystroke storage 3, operator input is not inhibited during the course of outputting a multi-character sequence.

While the multi-character sequence illustrated in Figure 4B comprises purely alphabetic characters, this is not essential and numeric characters or mixed alpha-numeric characters can be addressed by the character sequence storage 10 and thus produce a corresponding multi-character sequence. In addition, since display functions such as space, hyphen, punctuation marks, carriage return or the like, are also driven through the function control storage 6, such functions can also be mixed in with the multi-character sequence in the character sequence storage 10.

With the arrangement shown in Figure 3, each multi-character sequence, associated with a different key, has a corresponding start address storage location or entry point, and regardless of the number of times that particular key is depressed in a multi-character mode, the same multi-character sequence is displayed. However, as is mentioned above, much English text is comprised of word pairs, for example, the combinations previously mentioned. Thus, for example, it would be worthwhile to be able to produce the multi-character sequence "space be" on a second depression of a key after an initial depression of the same key so that with two sequential actuations of a key, a phrase such as "will be" will be displayed. This can be effected by the modification of the apparatus of Figure 3 which is illustrated in Figure 5.

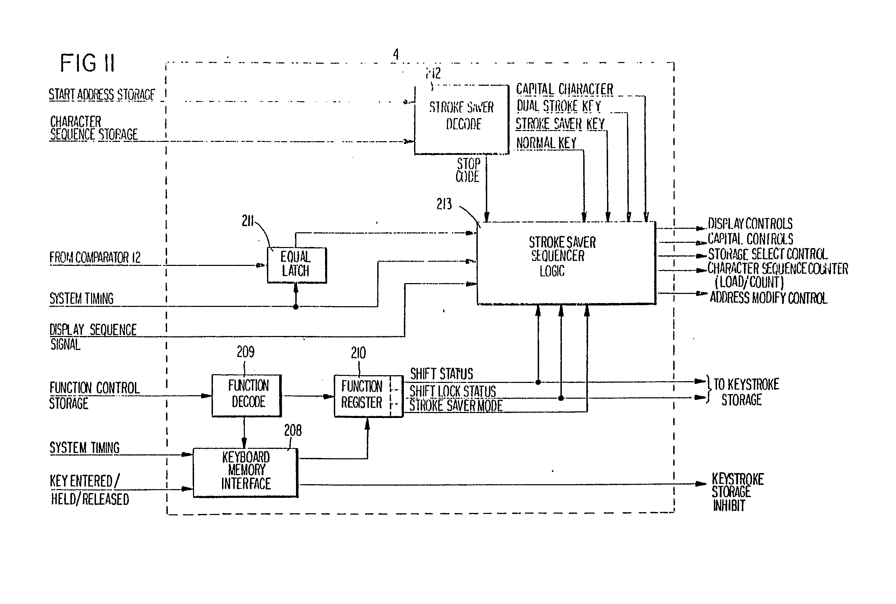

As is shown in Figure 5, the apparatus of Figure 3 has been modified by the addition of an address modifier 13, a previous key entry register 14 and comparator 12. In addition, stroke saver control is now modified to include a dual stroke latch and an equal latch (illustrated in Figure 11). The sequential depression of the same stroke saver key, in a multi-character mode, causes a second file to be accessed on the second actuation which results in a different multi-character sequence. Accordingly, the first actuation of a key associated with plural multi-character sequences will call up the first multi-character sequence, a second sequential actuation of the identical key will call up the second multi-character sequence and so on. This operation is effected by firstly storing in register 14 the previous key entry, and on a subsequent key entry, making a comparison in the comparator 12. If the comparison indicates sequential actuation of the identical key, the equal latch in the stroke saver control 4 is set so that the key code, when employed as an address to address the start address storage unit 8, is first modified to select a different start address, i.e., that start address associated with the second multi-character sequence.

The operation of the apparatus shown in Figure 5 is, for the most part, similar to the operations described in connection with Figure 3. Assume, for example, that key 32 (of Figure 2) has associated therewith a first multi-character sequence "of" and also has associated therewith a second multi-character sequence "space the" where "space" indicates the display function of producing a space. Accordingly, the key code corresponding to key 32 will address a location at start address storage 8 corresponding to which an address will be stored in the character sequence storage 10 which, when employed to address function control storage 6, will produce either the first character "o" or the display function — space —. In more detail:

When key 32 is actuated, its unique code addresses the function control storage 6 through storage select 5. The stroke saver control 4 responds thereto allowing the keyboard/memory controls 2 to induce the code to be stored in keystroke storage 3, along with the present status of shift and shift lock latches. Subsequently, the keyboard/memory controls 2 issue a display request to the control 7 and allows the next sequential key code in the keystroke storage 3 to be processed for display, i.e., the code corresponding to key 32. At this time, the comparator 12 compares the code for the key 32 with the previous entry register, and assuming that this was the first actuation for key 32, the comparator will not indicate a comparison. The key code corresponding to key 32 is then used to address the function control storage 6 and the start address storage 8. At this point in time the address modifier 13 does not modify the address for reasons which will be explained hereinafter. The stroke saver control 4 examines the function code associated with the entry from start address storage, indicating that the key is a stroke saver key, and assuming the recorder is in the multi-character mode, inhibits normal display operation. At the same time, as will be explained hereinafter, the function code associated with the start address storage location addressed will indicate this is a dual stroke key, i.e., that it can address more than one multi-character sequence, accordingly, a dual stroke latch in the stroke saver control 4 will be set. At the same time, the address associated with the entry addressed in the start address storage 8 is loaded in the character sequence counter 9. This address points to the first character of a multi-character sequence in the character sequence storage 10; the associated address from character sequence storage 10 is used to address the function control storage 6 through storage select 5 producing the drive signals for the character "o". This character is output either in lower or upper case form, depending upon the shift and shift lock status bits and the character capital decode from the character sequence storage. At this time, the code for key 32 is loaded in the previous key entry register 14. Before the end of the display cycle, character sequence counter 9 is incremented and the stroke saver control 4 determines whether or not a stop code has been detected. If not, the next character is output and so on until a stop code is detected. When a stop code is detected, the recorder begins processing the next keystroke entry; note at this time the dual stroke latch is set.

Assuming the next keystroke is another actuation of key 32, a similar operation occurs except that now when the comparison is made by the comparator 12, equality is the result. The equality result from comparator 12 causes an equal latch in the stroke saver control 4 to be set. If the comparison had not been successful, the dual stroke latch in stroke saver control 4 would be reset.

However, continuing with out example, with the equal and dual stroke latches both set, the code corresponding to the key 32 forwarded from storage select 5 to the start address storage 8 is now modified by the address modifier 13. Address modifier 13 may simply add an offset to the key code to address a different area in the start address storage 8. As a result, a different location in character sequence storage 10 is addressed which will produce a different output sequence. The succeeding operations have already been explained, i.e., as each location in character sequence storage 10 is addressed, it reads out an address associated with function control storage 6 to produce the drive signals for generating the associated character and the sequence continues until a stop code is detected. When the last character in the second multi-character sequence has been output, the recorder proceeds on to locate the next key actuation. Since the second multi-character sequence was begun at a different location in storage 10, a different sequence results. In this fashion, actuation of key 32 can, in a normal mode of operation, produce the numeral 9, in the multi-character mode, the first actuation of the key can produce multi-character sequence "of" and a second actuation of the key immediately following a first actuation of the key will produce the multi-character sequence "space the". Of course, each time key 32 is actuated in the multi-character mode, the same sequence "of" will be produced unless the actuation of key 32 immediately follows prior actuation of the same key.

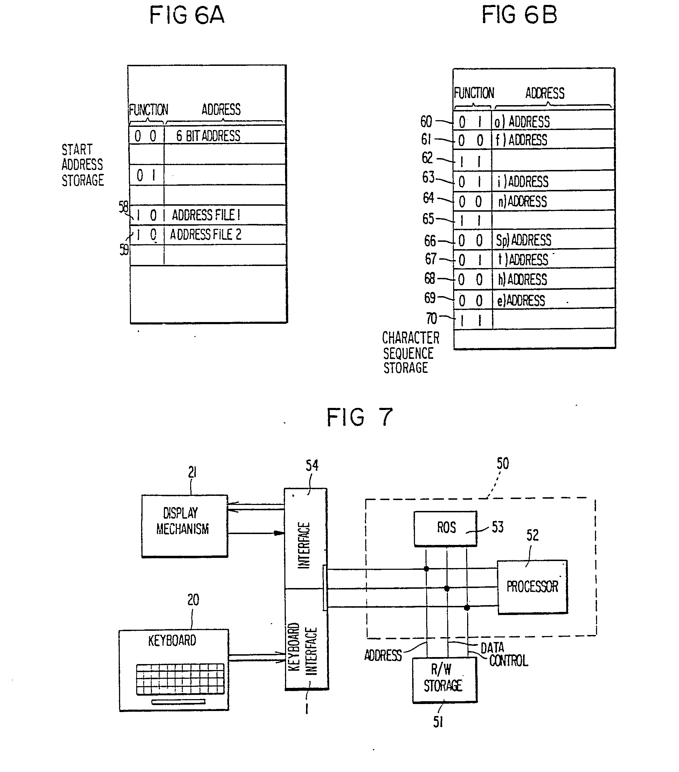

Figure 6A and 6B illustrate, respectively, typical entries in a start address storage 8 and typical entries in a character sequence storage 10 associated with the apparatus of Figure 5. Referring first to Figure 6A, each entry is divided into a multi-bit function code, and a multi-bit address. As shown in Figure 6A, the function code is two bits long, a first function code for example 00, identifies a normal key, i.e., one not associated with the stroke saver mode of operation. When such a function code is detected by the stroke saver control 4, normal display operation is allowed to continue. A second function code, for example 01, indicates a stroke saver key, but a key which does not have dual stroke capabilities. Accordingly, the stroke saver control 4, on detecting such function code, inhibits the normal display control operation, but the dual stroke latch is not set. Another function code, for example 10 identifies a stroke saver key with the dual stroke capability. Detection of such code sets the dual stroke latch in stroke saver control 4. For each dial stroke key, two entries are offset by the offset provided by the address modifier 13. Each entry includes a pointer to a different entry in the character sequence storage 10. Before illustrating an example, typical contents of the character sequence storage 10, shown in Figure 6B, will be discussed.

As shown in Figure 6B, each entry in the character sequence storage 10 also includes a multi-bit function code and an address. One function code, for example 00, identifies a character which is to be printed in lower case, a second function code, for example 01, identifies a character which can be printed in upper case, and a third function code, for example 11, is the stop code. The shift lock, when set, will result in all characters capitalized. When shift is set, only those characters with function code 01 will be capitalized.

Thus for example, a first plurality of entries in the character sequence storage, the entries identified at locations 60, 61 and 62 include two entries, one for addressing in the function control storage 6, the location producing the drive signals necessary to display the character "o" and the second entry resulting in producing of the character "f", the third entry being a stop code.

Entries 63—65, in a similar fashion, when interrogated, result in the display of the multi-character sequence "in".

Entries 66—70 may, for example, represent the second multi-character sequence for use with a dual stroke key. Thus, the first entry results in a spacing function, and the next three entries produce the characters "the", the last entry comprising the stop code.

If, for example, the key code generated by key 31, addresses location 58 in the start address storage, and the address modifier 13 offset the location in the start address storage accessed by an amount sufficient to access location 59, and assuming further that the address at location 58 referred to location 63 in the character sequence storage and the address associated with location 59 accessed location 66 in the character sequence storage, the following sequence of events occurs on dual depression of key 31 in the multi-character mode. The key code for key 31 accesses location 58 in the start address storage, unmodified since we further assume that previous keystroke was not that of key 31. As a result, stroke saver control 4 recognizes that the key 31 is a stroke saver key and since the apparatus is in the multi-character mode, the stroke saver control inhibits normal display operation thereby precluding outputting the character 8 or *. At the same time, locations 63 through 65 in the character sequence storage are accessed and thus the characters "in" are displayed. Just prior to completion of display of the character "i" the key code corresponding to key 31 is stored in the previous key register. Since the stroke saver control recognized this as not only a stroke saver key but a dual stroke key, the dual stroke latch is set. With the second stroke of key 31, the comparator 12 indicates an equality and therefore the equal latch in the stroke saver control 4 is also set. Accordingly, in processing this second key stroke entry, the normal key code accessing location 56 is modified so that the access is to the location 59. As a result, locations 66—70 in the character sequence storage are accessed, resulting in display of "space the". As a result, the sequential actuation of key 31 results in the display of the plural multi-character sequence "in the".

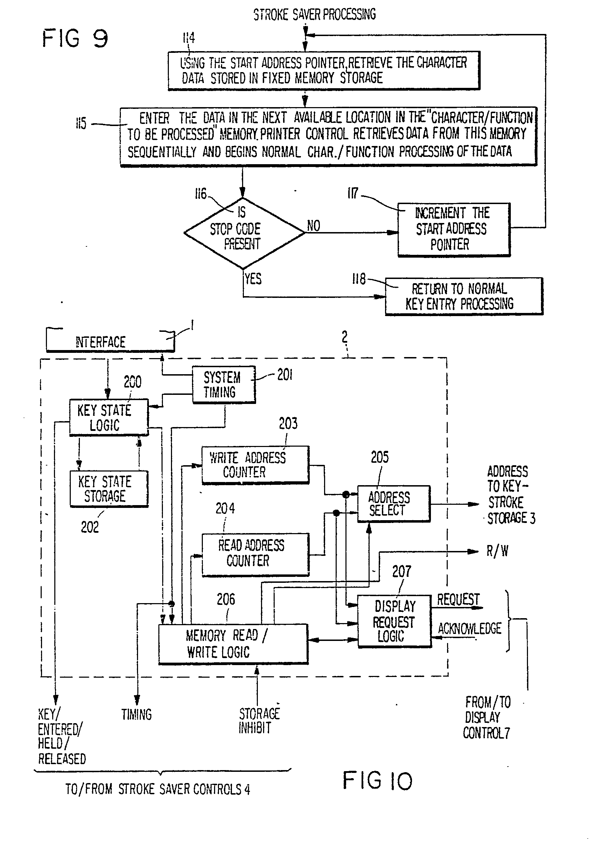

Figures 10 and 11 disclose, in a detailed block diagram fashion, the apparatus included in the block keyboard/memory control 2 and stroke saver control 4 of Figures 3 and 5.

As shown in Figure 10, the keyboard/memory control 2 responds to the interface 1, to the display control 7 and to the stroke saver control 4, and provides signals in turn to the interface 1, to the display control 7, to the stroke saver control 4 and the keystroke storage 3. Included in the keyboard/memory control 2 is a key state logic circuit 200, a key state storage circuit 202, a system timing circuit 201, a write address counter 203, a read address counter 204, an address select network 205, a memory read/write logic circuit 206 and a display request logic 207.

The key state logic 200 includes a comparator which responds to the key code signals produced by the interface 1, and to the signals from the key state storage 202 to determine the three states of a key entry, i.e., first entry, held depressed and key released. These determinations are made in conjunction with the system timing circuit 201. The system timing circuit 201 includes an oscillator and clock generating circuits to synchronize the output of the interface 1 and the key state logic circuit 200. Thus, for example, the timing circuit 201 strobes interface 1 to determine whether or not a key is depressed. When the output of interface 1 has settled, the timing circuit 201 can strobe the comparator in the logic 200 to determine the first entry, held depressed or released status of a key and to, at the same time, update the key state storage 202 for a future comparison. The comparison is made by comparing the identity of an actuated key (identified by the coded signal from interface 1) with a prior condition for that key maintained in key state storage 202.

The read and write address counters 203 and 204, respectively, are used to address the keystroke storage 3, and which of these counters is employed is determined by the address selection network 205. The counters are incremented or reset and the address select network 205 is operated by signals from the memory read/write logic 206. In turn, the memory read/write logic circuit 206 responds to the system timing circuit 201, the key state logic 200, a storage inhibit signal provided by the stroke saver control 4, as will be explained, and signals from the display request logic 207. For each key actuation, the storage of which is not inhibited (as will be explained), the memory read/write logic 206 increments the write address counter 203, so that the key code can be written at the next sequential location in the keystroke storage 3. At the same time, the address select network 205 is allowed to gate the contents of the incremented write address counter 203 out to address the keystroke storage 3. In addition, the logic 206 outputs a display request to display request logic 207; when the request is acknowledged by the display control 7, a corresponding signal at the logic 206 causes the read address counter 204 to be incremented and allows the address select network 205 to gate the incremented contents of the read address counter 204 out to address the keystroke storage 3. In this fashion, sequential key actuations are placed in sequential locations in the keystroke storage 3, and display of the contents of the keystroke storage 3 are effected in sequential order. The use of the two counters 203 and 204 allows this buffered operation to proceed. This normal operation may be prevented on the receipt of a storage inhibit signal from the stroke saver control 4, which signal is produced when the stroke saver control 4 determines that a key actuation is the result of the depression of the stroke saver key 38 or the shift or shift lock keys 40 or 41, respectively, since actuation of these keys does not result in storage of a key code.

Description of the operation of the keyboard/memory control 2 will be deferred and provided in conjunction with the description of the operation of the stroke saver control 4.

Figure 11 is a detailed block diagram of the stroke saver control 4. As shown in Figure 11, the stroke saver control 4 responds to signals from the start address storage 8 and the character sequence storage 10, from the comparator 12, from the system timing circuit 201, from the display control 7, the function control storage 6 and the keyboard/memory control 2. In addition, the stroke saver control 4 provides signals to the key stroke storage 3, to the memory read/write logic 206 in the keyboard/memory control 2, to the address modifier circuit 13, to the character sequence counter 9, to the storage select 5 and to the display control 7.

More particularly, the stroke saver control 4 includes a stroke saver decode circuit 212 which responds to the function portion of either the start address storage 8 or the character sequence storage 10. This function portion is decoded to indicate a capital character, a dual stroke key, a stroke saver key, a normal key or a stop code. The output of the stroke saver decode circuit 212 is provided to the stroke saver sequencer logic 213. Other inputs to the stroke saver sequencer logic are provided by the equal latch 211 which in turn, may be set from the comparator 12 (see Figure 5). Other inputs to both the equal latch 211 and the stroke saver sequencer logic 213 are provided by the system timing circuit 201, as well as signals from the display control 7. The function saver control 4 also responds to the output of the function control storage 6, which is provided to the function decode circuit 209. The function decode circuit 209 is arranged to respond to the key codes generated by interface 1 in response to actuation of one of three keys, i.e., the stroke saver key 38, the shift lock key 40, or the shift key 41. Decoding actuation of any of these keys provides two results. Firstly, the corresponding latch in function register 210 is caused to coincide with the status of the associated function. More particularly, function register 210 includes at least three latches, one for the stroke saver mode, one for shift lock status and one for shift status. Each of these latches provides an output to the stroke saver sequencer logic 213, and the latter of the two latches also provides an output to the keystroke storage 3, the reason for which will be explained hereinafter. In addition, the keyboard/memory interface 208 responds to the output of the function decoder 209 as well as to the system timing 201 and to the status of the key entered/held/released from logic circuit 200. The keyboard memory interface 208 provides firstly, an output to the function register 210 and the keystroke storage inhibit signal to the keyboard memory read/write logic 206. The entry of shift, shift lock or stroke saver will, at the time of a strobe determined by the system timing, change the condition of the associated latch in function register 210. Similarly, the release of shift status or shift lock will, at the appropriate strobe time, change the status of the associated latch in the function register 210. On the other hand, the stroke saver mode alternates from key depression to key depression such that holding or releasing the stroke saver mode has no effect on the associated latch but instead, the latch changes state on each entry. The output of the mode latch in register 210 is also used to enable indicator 22 (Figure 2) when the latch is set to provide the operator with feedback. The change of state of any of these keys, as detected by the function decode circuit 209 will, based on the appropriate strobe generated by the system timing, generate the keystroke storage inhibit such that the stroking of that key does not result in entry of a code in the keystroke storage 3.

As mentioned in connection with Figures 3 and 5, the key code generated in interface 1 is stored in the keystroke storage 3 when enabled by the keyboard/memory control 2. In addition, the status of the shift and shift lock latches is also stored, for reasons to be explained hereinafter. With the foregoing in mind, an explanation of the operation will now be provided.

To simplify the description of the operation, we will assume that the text recorder is in a stroke saver mode as a result of a previous actuation of the stroke saver key, i.e., the corresponding latch in function register 210 is set. We will now explain the response of the text recorder to stroking of a typical key, such a key 27.

The keyboard interface, synchronized by the system timing circuit 201 creates a multi-bit signal (sometimes referred to as the key code) which represents the actuated key. The signal is provided to the key state logic 200, where the comparator included therein compares the status of key 27 with the previous status of key 27 obtained from the key state storage circuit 202. Based on the conditions we have laid down, that status will be key entered. At the same time, the status of key 27 in key state storage 202 is altered so that if the key remains depressed, its status will be considered on a following comparison as key held rather than key entered. The key code, from the interface 1, is coupled through the storage select network 5 and addresses a unique location of the function control storage 6 corresponding to the key code. The output from the function control storage 6 is provided to the function decode circuit 209 Figure 11). As described, the function decode circuit 209 is arranged to decode only the stroke saver, shift and shift lock keys and, in the event of such a decode, to produce a storage inhibit signal. Since the key we have assumed to have been actuated is not one of these keys, a storage inhibit signal would not be generated.

In the absence of a storage inhibit signal, the memory read/write logic 206 increments the write address counter 203 and causes the address select network 205 to pass the contents of the incremented write address counter on to address the keystroke storage 3. The read/write signal causes the key code for the actuated key to be written into the key stroke storage 3. As shown in Figures 3, 5 and 11, the status of the shift and shift lock latches in function register 201 are also coupled to the key stroke storage 3, with the status of these latches stored along with the code for the actuated key.

If, on the other hand, the actuated key was one of the shift, shift lock or stroke saver mode keys, the interface 1 would create the corresponding key code and the key state logic 200 would generate a key entered status for this key. At the same time, the key code is coupled to the storage select network 5 to address a unique location in the function control storage 6. The output of the function control storage 6, coupled to the function decode circuit 209 would, in conjunction with the system timing and key entered status signals, result in the production of a key stroke storage inhibit signal. As a result, the memory read/write logic 206 does not cause incrementing of the write address counter 203 and does not couple an address through the address select network 205 to the keystroke storage 3. As a result, the key code for the stroke saver, shift or shift lock key depression is not stored in the keystroke storage 3. However, depression of one of these keys would, if appropriate, cause the status of the associated latch in the function register 210 to track the change in the key status.

Continuing on, however, with our example, after storage of the key code in the keystroke storage 3, the memory read/write logic 206 initiates a display request through the display request logic 207. The display request logic includes a comparator and a state sequencing logic which monitors the outputs from the read address counter 204 and the write address counter 203 to determine if there are any buffered codes in the keystroke storage 3. The display control 7 returns with a display acknowledgement if it is not in the process of processing a prior key code. The display request logic 207, on receiving the display acknowledge, passes control to the memory read/write logic 206 to read out the next key code to be processed. This is accomplished by the memory read/write logic 206, by incrementing the read address counter 204 and allowing the address counter contents to address the key stroke storage 3. On reading out the contents of the keystroke storage 3, the data read out is, of course, the key code corresponding to the actuated key, as well as the status of the shift and shift lock latches at the time the key was entered. Display control 7 enables the storage select network 5 to address the function control storage 6 and the start address storage 8.

The contents of the start address storage 8, coupled to the stroke saver decode circuit 212 (Figure 11) determines whether or not a stroke saver key had been actuated. In our example, of course, key 27 is a stroke saver key. In addition, in connection with Figure 5, the stroke saver decode circuit 212 also determines whether or not the key depressed is a dual stroke key. The decoded results are coupled to the stroke saver sequencer logic 213.

The stroke saver sequence logic 213 is a state sequencer which depends on multiple inputs, including:

1. stroke saver mode from the corresponding latch in the function register 210;

2. shift status from the associated latch in function register 210;

3. shift lock status from the associated latch in function register 210;

4. character capital signal from stroke saver decode circuit 212;

5. dual stroke key status from the stroke saver decode 212;

6. stroke saver key status from the stroke saver decode 212;

7. normal key from the stroke saver decode 212;

8. stop code from the stroke saver decode 212;

9. equal status from the equal latch 211;

10. system timing from the circuit 201; and

11. display sequence from the display control 7.

Based upon the various inputs, the stroke saver sequencer logic assumes a unique status and that status provides multiple output signals. For example, assuming the key was a stroke saver key, one output from the stroke saver sequencer logic 213 is coupled to the display control 7 to inhibit normal display control processing.

In the event that the actuated key was not only a stroke saver key but a dual stroke key, then the stroke saver sequencer logic 213, based on the status of the equal latch 211 appropriately controls the address modifier 13. That is, if the equal latch had been set, the address modifier is controlled to modify its input, and if the equal latch 211 is not set, then no such control is effected. Likewise, for any stroke saver key, the character sequence counter is controlled to load the contents of the start address storage, and based on subsequent decoding of each character sequence storage in the stroke saver decoder 212, the character sequence counter is incremented. In the event of a stroke saver key actuation, the storage select control enables the storage select circuit 5 to respond appropriately to its input.

The next several steps in the processing have been described in connection with Figures 3 and 5, i.e., the contents of the start address storage 8 are loaded in the character sequence counter 9, and that is used to address the character sequence storage 10, whose output is coupled to the storage circuit 5 to address a unique location in the function control storage 6. Similarly, the contents of the character sequence storage capitalization information is provided to the stroke saver sequencer logic 213. That information, coupled with the status of the shift and shift lock latches, determines capital control output of the stroke saver sequencer logic 213. More particularly, if the contents of the character sequence storage indicate that a character should be capitalized, the capital control will result in capitalization of the character if the shift status is in the set state. On the other hand, if the shift status is not set, then the character will not be capitalized, regardless of the contents of the character sequence storage. Finally, if the shift lock status is set, the character will be capitalized regardless of the contents of the character sequence storage. At this time, the stroke saver sequencer logic 213 also enables the storage select control 5 so that the output of the character sequence storage 10 can address a unique location in the function control storage 6. Of course, the function control storage 6, at the addressed location, stores the necessary drive signals, and the stroke saver sequencer logic 213 enables the display control to, in turn, enable the I/O drivers 11 to allow the output of function control storage 6 to pass therethrough and result in a corresponding display. Before the end of the machine cycle in which that character is displayed, the status of the display sequence coupled to the stroke saver sequencer logic 213 through the status of the display sequence signal, results in incrementing the character sequence counter 9. Accordingly, a new location in the character sequence storage 10 is addressed and decoded in the stroke saver decode circuit 212. Similar operations result until a stop code is decoded. When the stop code is decoded, the stroke saver sequencer logic 213 responds, disabling the stroke saver select control 5 and terminates the inhibition to the display control 7.

This returns the text to its normal operating function and if any display requests are pending, for example, because of buffered keystroke entries in the keystroke storage 3, processing of those entries can pick up at this point.

The foregoing description, while generally related to Figure 3, is also pertinent to Figure 5. In the event that a stroke saver key was depressed which was not a dual stroke key, then the stroke saver sequencer logic 213 never interrogates or determine the status of the equal latch 211 and thus, never enables the address modifier 13. However, if the stroke saver key depressed was also a dual stroke key, then prior to enabling the loading of the character sequence counter 9, the status of the equal latch 211 would be determined. If the equal latch is set, the address modifier 13 is enabled. The remaining operation of Figure 11 has already been explained in the case of the second actuation of a dual stroke key, and no further discussion appears necessary.

As was mentioned, it may be desirable to automatically add a space after a punctuation graphic, for example, those corresponding to keys 42 or 43. This is effected with the apparatus of Figures 3 or 5 by simply designating these keys as stroke saver (or multi-character) keys and providing the sequence "," space or "." space in the associated character sequence storage 10.

A further preferred embodiment of the invention is now disclosed in relation to Figures 7, 8 and 9. In this embodiment of the invention, the functions of the embodiment of Figure 3, 4A and 4B are implemented with the further capability of implementing the functions implied by keys 35 and 36 (Figure 2). Actuation of these keys in multi-character display mode results in displaying one of two multi-character sequences, the particular selected character sequence depends on the preceding keystroke, i.e., the keystroke before stroking key 35 or 36, for example. Similarly, actuation of key 37, when in the multi-character display mode, will result in the output of the multi-character (word) sequence associated with that key or the punctuation graphic depending on the previously stroked key. This embodiment of the invention is disclosed in connection with a software implemented logic device, and thus, as shown in Figure 7, the apparatus includes a keyboard 20 and a keyboard interface 1 which may be identical to the apparatus disclosed in connection with Figures 3 and 5, as well as a display 21 which likewise is similar to the displays previously disclosed in that it may comprise a hard-copy printer or a display such as a CRT. A microprocessor 50 is employed to respond to each of the different key codes provided by the interface 1 and to output the necessary coded signals to output driver or interface 54 to appropriately drive display 21.

As shown in Figure 7, the microprocessor 50 is coupled to the keyboard interface 1 and the interface 54 via data, address and control lines. The microprocessor 50 includes a sequential logic processor 52 and a read only storage (ROS) 53. Also coupled to the data address and control lines of the microprocessor 50 are a read/write storage (R/W) device 51. Preferably, the read only storage 53 embodies in coded form a set of predetermined responses for the processor 52 as well as fixed data as will be defined hereinafter. For example, this fixed data may include a reserved area corresponding to the function control storage 6, files containing pointer information for pointing to specific locations in the function control storage (corresponding to the character sequence storage 10) as well as information used to develop an address to the pointer (corresponding to the start address storage 8). The read/write storage 51, on the other hand, may include reserved areas for the present keystroke being processed, as well as keystroke awaiting processing (all corresponding to the keystroke storage 3) and, in addition, an area reserved for a previous key entry, corresponding to the previous key entry register 14.

In this embodiment of the invention, the microprocessor 50 recognizes three different classes of keys, i.e., a non-stroke saver key, the display of processing which is unchanged regardless of whether or not the apparatus is in a multi-character mode or not (for example, any one of the alphabetic character keys fall in this category); the stroke saver mode key 38 (which is processed to alter the mode in which the apparatus is operating) and a stroke saver key, i.e., for example, keys 23—37.

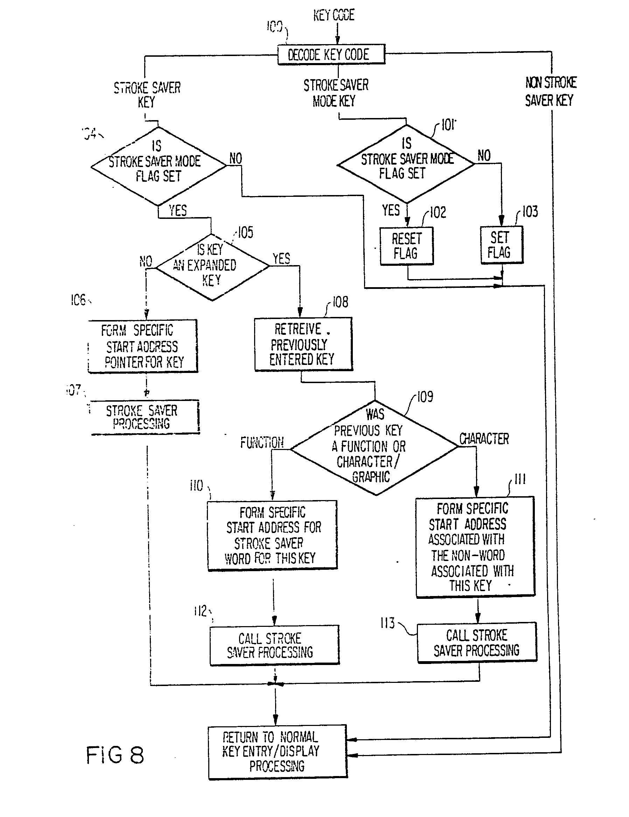

As has been disclosed, each actuation of a key causes the interface 1 to generate a key code, unique to that key, and the first step in the processing for display comprises step 100 (see Figure 8) wherein the particular key code actuated is decoded to determine whether or not it is a stroke saver key, a stroke saver mode key or a non-stroke saver key. Those skilled in the art will understand how the decoding function can be accomplished. One suitable technique is the use of a look-up table; another technique is to insure that the unique codes for the different categories of key actuation can be decoded by examination of one or two bit positions.

Assuming that the decode key code function 100 decodes a non-stroke saver key, the processor executes the normal key entry/display processing. Such processing is similar to that shown in Figure 1 of the present application and since it forms prior art to the application, no further discussion is believed necessary.

In the event that the decode key code function 100 results in the identification of stroke saver key 38, function 101 is performed to determine whether or not the stroke saver mode flag is set. The flag corresponds to the function performed by the stroke saver latch of the function register 210 in stroke saver control 4. If it is set, then function 102 is performed to reset the flag. If the flag is not set, then function 103 is performed to set the flag. Either functions 102 or 103 terminate the processing for this key actuation.

In the event that decode keycode function 100 detects actuation of the stroke saver key, function 104 determines if the stroke saver mode flag is set, i.e., the mode flag that may be set at function 103. Assuming that the flag is set, function 105 determines if the actuated key is an expanded stroke saver key. An expanded stroke saver key is any key which can result in one of different possible displays depending on a prior keystroke or strokes. Such keys, for example, corresponding to keys 35—37 (Figure 2) are the keys for which a determination must be made of previous key entries for processing. Assuming it is not an expanded stroke saver key, the function 106 forms the specific start address pointer for the multi-character sequence associated with the key. This entails a simple table look-up for non-expanded stroke saver keys which have a fixed response. With this specific start address pointer, function 107 calls the stroke saver processing, which will be discussed in connection with Figure 9. The pointer formed by function 106 is similar to the function carried out by the start address storage device which is accessed by the key code itself, which access results in address to a character sequence storage which itself is a pointer to the function control storage.

On the other hand, if at function 105, an expanded key stroke actuation was detected, then function 108 retrieves from memory the previously entered key, as in Figure 5, for example, the previous key entry register 14 would contain this information, and the processor 50 performs a similar function.

For the particular expanded keys 35 and 36, which of the two multi-character sequences is to be output depends upon the previous key actuation, i.e. for example, a prior space or carriage return function results in display of the word, whereas a prior hyphen or alphabetic character results in display of the suffix. Thus, function 109 determines whether the previous key entry was a function or a character/graphic, i.e., hyphen key. If a previous key entry was a function (such as a space bar or carriage return), then function 110 is performed to form a specific start address pointer associated with the stroke saver word. On the other hand, if the previous key entry function was a character or graphic, then function 111 forms the specific start address pointer associated with the stroke saver suffix (i.e., the non-word display). Functions 110 and 11 perform essentially similar function to the address modifer 13, i.e., for one function, no address modification is effected, and for the other, the appropriate address modification produces the specific start address pointer. In either case, function 112 or 113 then calls stroke saver processing with the specific start address pointer. For key 37, the stroke saver word is displayed only if the prior keystroke was a function. In case the prior keystroke was a character or graphic, then the non-word, the punctuation mark is displayed. Accordingly, depending on the prior keystroke, either function 110 or 111 forms the appropriate start address.

As in the embodiment of Figures 3 or 5, this embodiment can be arranged to automatically add a space after a punctuation graphic such as that of keys 37, 42 or 43. This is effected by firstly designating the keys as stroke saver keys in the function control storage area of ROS 53, and including in the character sequence storage area of ROS 53, a space after the address of the punctuation graphic and before the stop code. Accordingly, when in the stroke saver of multi-character mode, a space will be automatically added after the symbol. To eliminate this function, the operator need only actuate the stroke saver key 38 before actuating the punctuation key.

Actuation of key 38, if in the multi-character mode, will change the mode to normal. In normal mode, of course, the graphic only is displayed in response to actuation of the punctuation key.

The stroke saver processing is illustrated in Figure 9. The first function, function 114, employs the start address pointer past with the call to the stroke saver processing (the start address pointer formed by functions 106, 110 or 111) to retrieve the character data stored in the fixed memory storage. Analogously, the apparatus of Figure 5 uses the pointer to access the character sequence storage 10 which itself points to the desired character. Function 114 uses a similar fixed area of ROS memory 53 addressed by the pointer. With this character data, function 115 enters the data in the next available location in the character/function buffer in R/W storage 51 which is a buffer area which passes data to normal display processing. Function 116 determines if the stop code is present, and if it is not, the start address pointer is incremented and functions 114 and 115 are again performed. The loop of functions 114—117 are repeated until the stop code is detected. At this point, the processor has derived, representations of each of the characters for the multi-character sequence which is desired to be displayed, and function 118 returns the processor to normal display processing.

From the foregoing, it should be apparent that the embodiment of Figures 7, 8 and 9 is capable of operating in a normal or multi-character mode, the response to actuating keys in the normal mode is that which is expected from the conventional typewriter. On the other hand, in the multi-character sequence mode (the stroke saver mode) the result of stroking a particular key depends on the key stored. For a non-stroke saver key, the response is the same as it would have been in the normal code. However, for a stroke saver, or multi-character sequence key, the response may be display of the associated multi-character sequence if, for example, the stroke saver key stroked was a non-expanded stroke saver key. On the other hand, if in the multi-character mode an expanded stroke saver key was stroked, the response may be one of two sequences, the sequence being determined by the previous key entry. The specific description of the embodiment of Figures 7—9 has not referred to the dual stroke key discussed in connection with the first embodiment of the invention. However, it should be apparent to those skilled in the art that functions 109—111 are capable of performing a selection between different multi-character sequences which is necessary to operation of the dual stroke keys and accordingly, the embodiment of Figures 7—9 can indeed exhibit the response displayed by the first embodiment of the invention. More particularly, to implement the dual stroke key, the test function 109 is altered to determine if the previously entered key equals the presently entered keys (and if it is a dual stroke key). Depending on the result of the test one or another pointer is formed to point to the beginning of one or another multi-character sequence.

Signal processing using sequential logic processor 52 in typewriter-like devices is well within the skill of the art and is employed for example, in IBM electronic typewriters models 50, 60 and 75.

With this type of arrangement, the signal responses are, for the most part, defined by the structure of the read only storage 53, using the various basic operations of the processor 52 as building blocks. Part of the overall response characteristic is typically built into the interface 54 and the degree of pre- or post-processing of signals that occurs is typically selected in view of cost, performance and timing considerations. It should be appreciated, in addition, that similar response characteristics may be achieved using direct wired logic (for example, as shown in the first embodiment of the invention) using techniques well known to those skilled in the art, when taken in conjunction with the teachings of this application.

**Claims**

1. A multi-character display controller for use in a text recorder of the type having:

a text display means for displaying one or more characters in a sequence, determined by the operator,

keyboard means including a plurality of keys each producing a coded signal representing said key when actuated by an operator, and,

decoder means for receiving coded signals from said keyboard means and for supplying corresponding drive signals for at least some of said keys to said text display means, said multi-character display controller including:

mode means for producing a mode signal and for changing an operating mode of the text recorder from a normal mode to a multi-character mode or from said multi-character mode to said normal mode when actuated by an operator,

first means responsive to said mode signal in a multi-character mode state for nullifying the normal response of said decoder means to at least a subset of said coded signals,

auxiliary decoder means and storage means associated with said auxiliary decoder means, said storage means retrievably storing signals representing preselected character sequences at locations corresponding to respective coded signals of said subset, said auxiliary decoder means responsive to said mode signal in a multi-character mode state and to said storage means for supplying to said text display means drive signals representing a preselected character sequence corresponding to that defined by signals read from said storage means; wherein said decoder means includes a function storage means for correlating at least some of said coded signals with associated drive signals,

said storage means includes:

first storage means addressed by said coded signals including an entry for at least each of said coded signals in said subset,

counter means responsive to said first memory means for storing signals representing said entry,

second storage means addressed by said counter means including an entry for each of said coded signals in said subset, a first sub-entry located at a location designated by an entry from said first storage means, each said entry including a stop code as a final sub-entry,

control means responsive to said second storage means for incrementing said counter means each time an output is produced by said second storage means, said control means responsive to a stop code read from said second storage means for inhibiting further incrementing of said counter means, said auxiliary decoder means including means for supplying outputs from said second storage means to address said function storage means.

2. A multi-character display controller according to claim 1, characterized in that:

said keyboard means includes at least a shift key and

a shift lock key,

said auxiliary decoder means includes a shift latch means and a shift lock latch means for tracking actuation of said shift and shift lock keys respectively, and

said auxiliary decoder means addresses said function storage means to supply said drive signals for each character in said preselected character sequence in upper or lower case format in dependence on said shift and shift lock latch means.

3. A multi-character display controller according to claim 2, characterized in that:

said auxiliary decoder means supplies drive signals representing upper case characters for each character in said sequence if said shift lock latch means is in a predetermined condition and supplies drive signals for an upper case character for selected characters in said sequence if said shift latch means is in a predetermined condition and said shift lock latch means is not in a predetermined condition.

4. A multi-character display controller according to claim 3, characterized in that said selected characters are identified by contents of said storage means.

5. A multi-character display controller according to claim 1, characterized in that said subset of coded signals includes at least one coded signal corresponding to a key associated with a punctuation mark and further characterized in that said second storage means includes three sub-entries for one said punctuation mark, a first sub-entry representing said punctuation mark, a second sub-entry representing a space function, and a third sub-entry representing said stop code.

6. A multi-character display controller for use in a text recorder of the type having:

text display means for displaying one or more characters in a sequence determined by an operator;

14

keyboard means including a first set of keying devices for producing coded signals representing respective alphabetic characters in response to an operator actuation and a second set of keying devices for producing coded signals representing respective numeric characters in response to operator actuation, and

decoder means for receiving coded signals from said keyboard apparatus and for supplying corresponding drive signals to said text display means, said multi-character display controller including:

mode means for producing a mode signal and for changing an operating mode of the text recorder from a normal mode to a multi-character mode or from said multi-character mode to said normal mode when actuated by an operator,

first means, responsive to said mode signal in a multi-character state for nullifying the normal response of said decoder means to at least a subset of the coded signals from said second set of keying devices, and

auxiliary decoder means and storage means associated with said auxiliary decoder means, said storage means retrievably storing signals representing preselected character sequences at locations corresponding to respective coded signals from said subset of said second set of keying devices, said auxiliary decoder means responsive to said mode signal in a multi-character mode state and to said storage means for supplying to said text display means drive signals representing a preselected character sequence corresponding to that defined by signals read from said storage means, wherein

said decoder means includes a function storage means correlating at least some of said coded signals with corresponding drive signals, said storage means includes:

first storage means addressed by said coded signals including an entry for at least each of said coded signals in said subset,

counter means responsive to said first storage means for storing signals representing said entry,

second storage means addressed by said counter means including an entry for each of said coded signals in said subset, a first sub-entry located at a location designated by an entry in said first storage means, each said entry including a stop code as a final entry,

control means responsive to said second storage means, for incrementing said counter means each time an output is produced thereby, said means responsive to a stop code read from said second storage means for inhibiting further incrementing of said counter means, said auxiliary decoder means including means for supplying outputs from said second storage means to address said function storage means.

7. A multi-character display controller according to claim 6, characterized in that said keyboard apparatus includes a third set of keying devices for producing coded signals representing respective punctuation marks in response to operator actuation and a fourth set of keying devices for producing coded signals representing respective text recorder functions in response to operator actuation, said multi-character display controller being further characterized in that it comprises:

buffer means for retaining a coded signal representing a prior operator key actuation until at least a subsequent operator key actuation,

second means responsive to operator actuation of a keying device in said third set, to said mode signal, and to said buffer means, for nullifying normal response of said decoder means to at least a second subset of coded signals representing actuation of a keying device of said third set of keying devices but only if a prior key stroke represented operator actuation of a key in said fourth set,

said auxiliary decoder means including means responsive to said mode signal, for responding to at least said second subset of coded signal during operation in said multi-character mode, to supply corresponding sequences of drive signals to said text display means, said storage means retrievably storing signals representing preselected character sequences at locations corresponding to respective coded signals from said second subset.

8. A multi-character display controller according to claim 6 or 7, characterized in that said storage means retrievably stores signals representing second preselected character sequences at location corresponding to respective codes from at least some of said subsets of coded signals, each of said second preselected character sequences including a space function preceding a first character, and further characterized in that it includes:

linkage means responsive to repeated actuation of an identical key in said subset without intervening actuation of any other key, to alter the response of said auxiliary decoder means on a second actuation of an identical key to supply a second preselected character sequence from said second storage means.

9. A multi-character display controller according to claim 8, characterized in that said linkage means includes:

a comparator for comparing a coded signal with an immediately prior entered coded signal,

a first latch set in response to a signal from said first storage means representing a code from said at least some of said subset of keying devices,

a second latch set in response to an equality result from said comparator,

and means for adjusting an input to said first storage means to access an entry representing a character sequence from said second set in response to said condition of said first and second latches.

## Revendications

1. Une unité de commande d'affichage à caractères multiples à utiliser dans un enregistreur de texte du type comportant:

un moyen d'affichage de texte pour afficher un ou plusieurs caractères dans une séquence déterminée par l'opérateur,

un clavier comprenant une pluralité de touches générant chacune un signal codé représentant ladite touche lorsque celle ci est actionnée par l'opérateur et

des moyens de décodage pour recevoir des signaux codés dudit clavier et pour délivrer des signaux de commande correspondants en ce qui concerne au moins certaines desdites touches, audit moyen d'affichage de texte, ladite unité de commande d'affichage à caractères multiples comprenant:

des moyens de commande de mode pour générer un signal de mode et pour changer le mode de fonctionnement de l'enregistreur de texte d'un mode normal à un mode multi-caractères ou dudit mode multi-caractères audit mode normal, lorsqu'ils sont actionnés par l'opérateur,

des premiers moyens répondant audit signal de mode dans un état de mode multi-caractères pour annuler la réponse normale desdits moyens de décodage à, au moins, un sous ensemble desdits, signaux codés,

des moyens de décodage auxiliaires et des moyens d'emmagasinage associés auxdits moyens de décodage auxiliaires, lesdits moyens d'emmagasinage emmagasinant des signaux récupérables représentant des séquences de caractères présélectionnées dans des emplacements correspondant à des signaux codés respectifs dudit sous ensemble, lesdits moyens de décodage auxiliaires répondant audit signal de mode dans un état de mode multi-caractères et audit moyen d'emmagasinage pour appliquer des signaux de commande auxdits moyens d'affichage de texte représentant une séquence de caractères présélectionnée correspondant à celle définie par des signaux lus à partir desdits moyens d'emmagasinage, dans laquelle:

lesdits moyens de décodage comprennent un moyen d'emmagasinage de fonctions pour faire la corrélation entre au moins certains desdits signaux codés et les signaux de commande associés,

lesdits moyens d'emmagasinage comprennent:

des premiers moyens d'emmagasinage adressés par lesdits signaux codés, comprenant une entrée pour au moins chacun desdits signaux codés dans ledit sous ensemble,

des moyens de comptage répondant auxdits premiers à mémoire pour emmagasiner des signaux représentant ladite entrée,

des seconds moyens d'emmagasinage adressés par lesdits moyens de comptage, comprenant une entrée pour chacun desdits signaux codés dans ledit sous ensemble, une première sous entrée située dans une emplacement désigné par une entrée issue desdits premiers moyens d'emmagasinage, chacune desdites entrées comprenant un code d'arrêt comme sous entrée finale,

des moyens de commande répondant auxdits seconds moyens d'emmagasinage pour incrémenter lesdits moyens de comptage chaque fois qu'une sortie est délivrée par lesdits seconds moyens d'emmagasinage, lesdits moyens de commande répondant à un code d'arrêt lu à partir desdits seconds moyens d'emmagasinage pour empêcher toute autre incrémentation desdits moyens de comptage, lesdits moyens de décodage auxiliaires comprenant des moyens pour délivrer des sorties à partir desdits seconds moyens d'emmagasinage pour adresser lesdits moyens d'emmagasinage de fonctions.

2. Une unité de commande d'affichage à caractères multiples selon la revendication 1, caractérisée en ce que:

ledit clavier comprend au moins une touche de décalage et une touche de blocage de décalage,

lesdits moyens de décodage auxiliaires comprennent un moyen à bascules de décalage et un moyen à bascules de blocage de décalage pour suivre

l'actionnement desdites touches de décalage et de blocage de décalage respectivement, et

lesdits moyens de décodage auxiliaires adressent lesdits moyens d'emmagasinage de fonction pour délivrer lesdits signaux de commande pour chaque caractère dans ladite séquence de caractères présélectionnée en majuscules ou minuscules suivant la commande des moyens de décalage et à bascules de blockage de décalage.

3. Une unité de commande d'affichage à caractères multiples selon la revendication 2, caractérisée en ce que:

lesdits moyens de décodage auxiliaires délivrent des signaux de commande représentant des caractères majuscules pour chaque caractère dans ladite séquence si lesdits moyens à bascules de blocage de décalage sont dans un état prédéterminé et délivrent des signaux de commande pour un caractère majuscule pour des caractères sélectionnés dans ladite séquence si lesdits moyens à bascules de décalage sont dans un état prédéterminé et si lesdits moyens à bascules de blocage de décalage ne sont pas dans un état prédéterminé.

4. Une unité de commande d'affichage à caractères multiples selon la revendication 3 caractérisée en ce que lesdits caractères sélectionnés sont identifiés par le contenu desdits moyens d'emmagasinage.

5. Une unité de commande d'affichage à caractères multiples selon la revendication 1 caractérisée en ce que ledit sous ensemble de signaux codés comprend au moins un signal codé correspondant à une touche associée à un signe de ponctuation et caractérisée en outre en ce que lesdits seconds moyens d'emmagasinage comprennent trois sous entrées pour un dit signe de ponctuation, une première sous entrée représentant ledit signe de ponctuation, une seconde sous entrée représentant une fonction d'espacement,

et une troisième sous entrée représentant ledit code d'arrêt.

6. Une unité de commande d'affichage à caractères multiples à utiliser dans une enregistreur de texte de type comportant:

des moyens d'affichage de texte pour afficher un ou plusieurs caractères dans une séquence déterminée par un opérateur,

un clavier comprenant un premier ensemble de touches pour générer des signaux codés représentant des caractères alphabétiques respectifs en réponse à une commande de l'opérateur et une second ensemble de touches pour générer des signaux codés représentant des caractères numériques respectifs en réponse à une commande de l'opérateur, et

des moyens de décodage pour recevoir des signaux codés issus dudit clavier et pour délivrer des signaux de commande correspondants auxdits moyens d'affichage de texte, ladite unité de commande d'affichage à caractères multiples comprenant:

des moyens de commande de mode pour générer un signal de mode et pour changer le mode de fonctionnement d'un enregistreur de texte d'un mode normal à un mode multi caractères ou dudit mode multi caractères audit mode normal sous la commande de l'opérateur,

des premiers moyens répondant audit signal de mode dans un état multi caractères pour annuler la réponse normale desdits moyens de décodage à au moins un sous ensemble de signaux codés issus dudit second ensemble de touches et des moyens de décodage auxiliaires et des moyens d'emmagasinage associés auxdits moyens de décodage auxiliaires, lesdits moyens d'emmagasinage emmagasinant des signaux récupérables représentant des séquences de caractères présélectionnées dans des emplacements correspondant à des signaux codés respectifs issus dudit sous ensemble dudit second ensemble de touches, lesdits moyens de décodage auxiliaires répondant audit signal de mode dans un état multi caractères et auxdits moyens d'emmagasinage pour délivrer auxdits moyens d'affichage de texte, des signaux de commande représentant une sequence de caractères présélectionnée correspondant à celle définie par des signaux lus dans lesdits moyens d'emmagasinage, caractérisée en ce que:

lesdits moyens de décodage comprennent un moyen d'emmagasinage de fonctions mettant en corrélation au moins certains desdits signaux codés avec des signaux de commande correspondants,

lesdits moyens d'emmagasinage comprennent:

des premiers moyens d'emmagasinage adressés par lesdits signaux codés, comprenant une entrée pour au moins chacun desdits signaux codés dans ledit sous ensemble,

des moyens de comptage répondant auxdits premiers moyens d'emmagasinage pour emmagasiner des signaux représentant ladite entrée,

des seconds moyens d'emmagasinage adressés par lesdits moyens de comptage, comprenant une entrée pour chacun desdits signaux codés dans ledit sous ensemble, une première sous entrée située dans une emplacement désigné par une entrée dans lesdits premiers moyens d'emmagasinage, chaque entrée comprenant un code d'arrêt comme entrée finale, des moyens de commande répondant auxdits seconds moyens d'emmagasinage pour incrémenter lesdits moyens de comptage chaque fois qu'une sortie est générée par ceux ci, lesdits moyens répondant à un code d'arrêt lu à partir desdits seconds moyens d'emmagasinage pour interdire toute autre incrémentation desdits moyens de comptage, lesdits moyens de décodage auxiliaires comprenant des moyens pour délivrer des sorties desdits seconds moyens d'emmagasinage pour adresser lesdits moyens d'emmagasinage de fonction.

7. Une unité de commande d'affichage à caractères multiples selon la revendication 6 caractérisée en ce que ledit clavier comprend un troisième ensemble de touches pour générer des signaux codés représentant des signes de ponctuation respectifs en réponse à une commande de l'opérateur et un quatrième ensemble de touches pour générer des signaux codés représentant des fonctions d'enregistreur de texte respectives en réponse à une commande de l'opérateur, ladite unité de commande d'affichage à caractères multiples étant en outre caractérisée en ce qu'elle comprend:

des moyens d'emmagasinage intermédiaire pour retenir un signal codé représentant une commande de touche précédente de l'opérateur jusqu'à, au moins, une autre commande de touche de l'opérateur,

des seconds moyens répondant à la commande d'une touche dudit troisième ensemble par l'opérateur, audit signal de mode et auxdits moyens d'emmagasinage intermédiaire pour annuler la réponse normale desdits moyens de décodage à, au moins, un second sous ensemble de signaux codés représentant la commande d'une touche dudit troisième ensemble de touches, mais seulement si un enfoncement de touche précédent a représenté la commande d'une touche dudit quatrième ensemble par l'opérateur,

lesdits moyens de décodage auxiliaires comprenant des moyens répondant audit signal de mode pour répondre, au moins, audit second sous ensemble de signaux codés, pendant le fonctionnement dans ledit mode multi-caractères, pour délivrer des séquences correspondantes de signaux de commande auxdits moyens d'affichage de texte, lesdits moyens d'emmagasinage emmagasinant des signaux récupérables représentant des séquences de caractères présélectionnées dans des emplacements correspondant à des signaux codés respectifs issus dudit second sous ensemble.

8. Une unité de commande d'affichage à caractères multiples selon la revendication 6 ou 7 caractérisée en ce que lesdits moyens d'emmagasinage emmagasinent des signaux récupérables représentant des secondes séquences de caractères présélectionnées dans des emplacements correspondant à des codes respectifs issus d'au moins certains desdits sous ensembles de signaux codés, chacune desdites secondes séquences de caractères présélectionnées comprenant une fonction d'espacement précédant un premier caractère, et caractérisée en outre en ce qu'elle comprend:

des moyens de liaison répondant à la commande répétée d'une touche identique dans ledit sous ensemble sans intervention de la commande d'une autre touche, afin de modifier la réponse desdits moyens de décodage auxiliaires à la seconde commande d'une touche identique pour délivrer une seconde séquence de caractères présélectionnée à partir desdits seconds moyens d'emmagasinage.

9. Une unité de commande d'affichage à caractères multiples selon la revendication 8 caractérisée en ce que lesdits moyens de liaison comprennent:

un comparateur pour comparer un signal codé à un signal codé entré immédiatement avant,

une première bascule conditionnée en réponse à un signal desdits premiers moyens d'emmagasinage représentant un code issu d'au moins certains desdits sous ensembles de touches,

une seconde bascule conditionnée en réponse à une égalité indiquée par ledit comparateur,

et des moyens pour ajuster une entrée auxdits premiers moyens d'emmagasinage afin d'accéder à une entrée représentant une séquence de caractères à partir dudit second ensemble en réponse audit état desdites première et seconde bascules.

## Patentansprüche

1. Steuervorrichtung zur Anzeige von mehreren Schreibzeichen für ein Textregistriergerät vom Typ, gekennzeichnet durch:

ein Textanzeigemittel, um ein oder mehrere Schreibzeichen in einer vom Bediener bestimmten Folge darzustellen,

eine Tastatur, die eine Vielzahl von Tasten umfasst, von denen jede ein kodiertes Signal erzeugt, das die entsprechende Taste darstellt, wenn sie vom Bediener betätigt wird, und

ein Dekodiermittel, das kodierte Signale von der genannnten Tastatur empfängt und zumindest einigen der genannten Tasten für das genannte Textanzeigemittel entsprechende Auslösesignale übermittelt, wobei die genannte Überwachungsvorrichtung mit Anzeige von mehreren Schreibzeichen folgendes umfasst:

ein Betriebsartenschaltmittel, um Betriebsartsignale zu erzeugen und um die Betriebsart des Textregistriergeräts von normaler Betriebsart auf Mehrzeichen-Betriebsart oder von der genannten Mehrzeichen-Betriebsart auf die genannte normale Betriebsart umzuschalten, wenn ein derartiges Umschalten von Bediener eingegeben wird,

ein erstes Ansprechmittel, das in einem Mehrzeichen-Betriebszustand auf das genannte Betriebsartsignal anspricht, um das normale Ansprechen des genannten Dekodiermittels auf zumindest eine Teilmenge der genannten kodierten Signale zu annullieren,

ein Hilfsdekodiermittel und ein Speichermittel, das zum genannten Hilfsdekodiermittel gehört, wobei das genannte Speichermittel abrufbar Signale einspeichert, die vorgewählte Zeichenfolgen an Plätzen darstellen, die den jeweiligen kodierten Signalen der genannten Teilmenge entsprechen und das genannte Hilfsdekodiermittel auf das genannte Betriebsartsignal in Mehrzeichen-Betriebsartstatus sowie auch auf das genannte Speichermittel anspricht, um dem genannten Textanzeigemittel Auslösesignale zu übermitteln, die eine vorgewählte Zeichenfolge darstellen, welche der von den Signalen definierten Zeichenfolge entspricht, nachdem diese Signale vom genannten Speichermittel gelesen wurden, worin:

das genannte Dekodiermittel ein Funktionsspeichermittel umfasst, um zumindest einige der genannten kodierten Signale den dazugehörigen Auslösesignalen zuzuordnen,

das genannte Speichermittel umfasst:

ein erstes Speichermittel, das von den genannten kodierten Signalen adressiert wird und zumindest einen Eingang für jedes der genannten kodierten Signale in der genannten Teilmenge besitzt,

ein Zählmittel, das auf das erste Speichermittel anspricht, um die dem genannten Eingang entsprechenden Signale zu speichern,

ein zweites Speichermittel, das vom genannten Zählmittel adressiert wird und einen Eingang für jedes der genannten kodierten Signale in der genannten Teilmenge und einen ersten Untereingang an einem Platz umfasst, der durch einen Eingang vom ersten Speichermittel bezeichnet wird, wobei jeder genannte Eingang einen Anhalt-Code als einen endgültigen Untereingang umfasst,

ein Steuermittel, das auf das zweite Speichermittel anspricht, um das genannte Zählmittel jedes Mal zu inkrementieren, wenn ein Ausgangssignal vom genannten zweiten Speichermittel erzeugt wird, wobei das genannte zweite Speichermittel gelesen wird, um ein weiteres Inkrementieren des genannten Zählmittels zu unterbinden, und das genannte Hilfsdekodiermittel ein Mittel umfasst, um Ausgangssignale vom genannten zweiten Speichermittel zu liefern mit dem Ziel, das genannte Funktionsspeichermittel zu adressieren.

2. Steuervorrichtung zur Anzeige von mehreren Schreibzeichen nach Anspruch 1, dadurch gekennzeichnet, dass:

die genannte Tastatur zumindest eine Umschalttaste und eine Umschaltverriegelungstaste umfasst,

das genannte Hilfsdekodiermittel ein Umschaltrastmittel und ein Umschaltverriegelungsrastmittel umfasst, um die Betätigung der genannten Umschalt- und Umschaltverriegelungstasten zu verfolgen, und

das genannte Hilfsdekodiermittel das genannte Funktionsspeichermittel adressiert, um die genannten Auslösesignale für jedes Schreibzeichen in der genannten Teilmenge im oberen oder im unteren Feldformat in Abhängigkeit von den genannten Umschalt- und Umschaltverriegelungsrastmittel zu erstellen.

3. Steuervorrichtung zur Anzeige von mehreren Schreibzeichen nach Anspruch 2, dadurch gekennzeichnet, dass:

das genannte Hilfsdekodiermittel Auslösesignale erstellt, welche die Schreibzeichen des oberen Feldes für jedes Schreibzeichen in der genannten Folge darstellen, wenn das genannte Umschaltverriegelungsrastmittel in einer vorbestimmten Stellung steht, und Auslösesignale für ein Schreibzeichen des oberen Feldes für aus der genannten Folge gewählte Schreibzeichen erstellt, wenn das genannte Umschaltrastmittel in einer vorbestimmten Stellung steht und das genannte Umschaltverriegelungsrastmittel nicht in einer vorbestimmten Stellung steht.

4. Steuervorrichtung zur Anzeige von mehreren Schreibzeichen nach Anspruch 3, dadurch gekennzeichnet, dass die gewählten Schreibzeichen durch den Inhalt des genannten Speichermittels identifiziert werden.

5. Steuervorrichtung zur Anzeige von mehreren Schreibzeichen nach Anspruch 1, dadurch gekennzeichnet, dass die genannte Teilmenge von kodierten Signalen zumindest ein kodiertes Signal umfasst, das einer Taste entspricht, die ein Satzzeichen darstellt, und weiter dadurch gekennzeichnet ist, dass das genannte zweite Speichermittel drei Untereingänge für eines der genannten Satzzeichen umfasst, wobei ein erster Untereingang dem genannten Satzzeichen und ein zweiter Untereingang einer Abstandsfunktion entspricht, und ein dritter Untereingang dem genannten Anhalt-Code entspricht.

6. Steuervorrichtung zur Anzeige von mehreren Schreibzeichen zur Nutzung in einem Textregistriergerät eines Typs, der umfasst:

ein Textanzeigemittel zur Darstellung von einem oder von mehreren Schreibzeichen in einer Folge, die vom Bediener bestimmt wird;

eine Tastatur mit einem ersten Satz von Tastvorrichtungen, um kodierte Signale zu erzeugen, die jeweils als Antwort auf eine Betätigung des Bedieners alphabetische Schreibzeichen darstellen, und einem zweiten Satz von Tastvorrichtungen, um kodierte Signale zu erzeugen, die jeweils auf eine Betätigung des Bedieners numerische Schreibzeichen darstellen, und

ein Dekodiermittel zum Empfang von kodierten Signalen von der genannten Tastaturvorrichtung und zur Übermittlung von dementsprechenden Auslösesignalen an das genannte Textanzeigemittel, wozu die genannte Steuervorrichtung zur Anzeige von mehreren Schreibzeichen aus folgendem besteht:

einem Betriebsartenmittel zur Erzeugung eines Betriebsartsignals und zum Wechseln der Betriebsart des Textregistriergeräts von normaler Betriebsart auf eine Mehrzeichen-Betriebsart oder von genannter Mehrzeichen-Betriebsart auf normale Betriebsart, wenn diese Umschaltung von einem Bediener eingegeben wird,

einem ersten Mittel, das in einem Mehrzeichen-Zustand auf das genannte Betriebsartsignal anspricht, um das normale Ansprechen des genannten Dekodiermittels auf zumindest eine Teilmenge der kodierten Signale vom genannten zweiten Satz der Tastvorrichtungen zu annullieren, und

einem Hilfsdekodiersignal und einem dazugehörigen Speichermittel, wobei das genannte Speichermittel abrufbar Signale einspeichert, die vorgewählte Zeichenfolgen an Plätzen darstellen, die den jeweiligen kodierten Signalen der Teilmenge des genannten zweiten Satzes der Tastaturvorrichtungen entsprechen, und das genannte Hilfsdekodiermittel in Mehrzeichen-Betriebsartstatus auf das genannte Betriebsartsignal sowie auch auf das genannte Speichermittel anspricht, um dem genannten Textanzeigemittel Auslösesignale zu übermitteln, die eine vorgewählte Zeichenfolge darstellen, welche der von den Signalen definierten Zeichenfolge entspricht, nachdem diese Signale vom genannten Speichermittel gelesen wurden, worin:

das genannte Dekodiermittel ein Funktionsspeichermittel umfasst, um zumindest einige der genannten kodierten Signale den dazugehörigen Auslösesignalen zuzuordnen,

das genannte Speichermittel umfasst:

ein erstes Speichermittel, das von den genannten kodierten Signalen adressiert wird und zumindest einen Eingang für jedes der genannten Signale kodierten Signale in der genannten Teilmenge besitzt,

ein Zählmittel, das auf das erste Speichermittel anspricht, um die dem genannten Eingang entsprechenden Signale zu speichern,

ein zweites Speichermittel, das vom genannten Zählmittel adressiert wird und einen Eingang für jedes der genannten kodierten Signale in der genannten Teilmenge und einen ersten Untereingang an einem Platz umfasst, der durch einen Eingang im ersten Speichermittel bezeichnet wird, wobei jeder genannte Eingang einen Anhalt-Code als einen endgültigen Eingang umfasst,

ein Steuermittel, das auf das zweite Steuermittel anspricht, um das genannte Zählmittel jedes Mal zu inkrementieren, wenn ein Ausgangssignal davon erzeugt wird, wobei das genannte Mittel auf einen Anhalt-Code anspricht, der vom genannten zweiten Speichermittel gelesen wird, um ein weiteres Inkrementieren des genannten Zählmittels zu unterbinden, und das genannte Hilfsdekodiermittel ein Mittel umfasst, um Ausgangssignale vom genannten zweiten Speichermittel zu liefern mit dem Ziel, das genannte Funktionsspeichermittel zu adressieren.

7. Steuervorrichtung zur Anzeige von mehreren Schreibzeichen nach Anspruch 6, dadurch gekennzeichnet, dass die genannte Tastaturvorrichtung einen dritten Satz von Tasten besitzt, um kodierte Signale zu erzeugen, die als Folge der Betätigung durch den Bediener jeweils Satzzeichen darstellen, und einen vierten Satz von Tasten, die als Folge der Betätigung durch den Bediener kodierte Signale erzeugen, die jeweils einer Textregistrierfunktion entsprechen, wobei die genannte Steuervorrichtung zur Anzeige von mehreren Schreibzeichen weiterhin umfasst;

einen Pufferspeicher, um ein kodiertes Signal das einer vorherigen Betätigung durch den Bediener entspricht, zumindest bis zur nächsten Betätigung einer Taste durch den Bediener zurückzuhalten,

ein zweites Mittel, das auf die Betätigung einer Tastvorrichtung von einem dritten Satz von Tasten durch den Bediener, auf das genannte Betriebsartsignal und das genannte Puffermittel anspricht, um ein normales Ansprechen des genannten Dekodiermittels zu annullieren und auf wenigstens eine zweite Teilmenge von kodierten Signalen zu lenken, die der Betätigung einer Tastvorrichtung des genannten dritten Satzes von Tasten entsprechen, aber nur, wenn ein vorheriger Druck einer Taste eine Betätigung einer Taste des vierten Satzes durch den Bediener darstellte,

das genannte Hilfsdekodiermittel mit Vorrichtungen, die auf das genannte Betriebsartsignal ansprechen, um zumindest in der genannten Mehrzeichen-Betriebsart auf eine zweite Teilmenge von kodierten Signalen zu reagieren, dem genannten Textanzeigemittel entsprechende Folgen von Auslösesignalen zu erstellen, wobei das genannte Speichermittel abrufbar Signale einliest, die vorgewählte Zeichenfolgen bedeuten in Plätzen, die den jeweiligen kodierten Signalen von der genannten zweiten Teilmenge entsprechen.

8. Steuervorrichtung zur Anzeige von mehreren Schreibzeichen nach Anspruch 6 oder 7, dadurch gekennzeichnet, dass das genannte Speichermittel abrufbar Signale einspeichert, die zweite vorgewählte Zeichenfolgen bedeuten an einem Platz, der den jeweiligen Code-Signalen von zumindest einigen der genannten vorgesetzten, kodierten Folgen entspricht, wobei jede der genannten zweiten, vorgewählten Zeichenfolgen eine Abstandsfunktion umfasst, die vor dem ersten Schreibzeichen steht und weiter gekennzeichnet, ist, durch:

ein Verbindungsmittel, das auf wiederholte Betätigung derselben Taste in der genannten Teilmenge anspricht, ohne dass die Betätigung einer anderen Taste vorkommt, um das Ansprechen des genannten Hilfsdekodiermittels auf eine zweite Betätigung derselben Taste zu ändern, damit eine zweite vorgewählte Zeichenfolge vom genannten zweiten Speichermittel geliefert wird.

9. Steuervorrichtung zur Anzeige von mehreren Schreibzeichen nach Anspruch 8, dadurch gekennzeichnet, dass das genannte Verbindungsmittel folgendes umfasst:

eine Vergleichsvorrichtung, um ein kodiertes Signal mit einem unmittelbar vorher eingelaufenen, kodierten Signal zu vergleichen, einen ersten Riegel, in Antwort auf ein Signal von dem genannten ersten Steuermittel gesetzt, das einen Code von wenigstens einer der genannten Teilmengen der Tastaturvorrichtung darstellt,

einen zweiten Riegel, in Antwort auf eine Gleichheitsergebnis von der genannten Vergleichsvorrichtung,

und Mittel, um eine Eingabe in das genannte erste Speichermittel anzupassen, um den Zugriff zu einem Eingang zu ermöglichen, der in Antwort auf den genannten Zustand des genannten ersten und zweiten Riegels eine Zeichenfolge vom genannten zweiten Satz darstellt.

FIG1
PRIOR ART

20 KEYBOARD — 1 INTERFACE — 3 KEYSTROKE STORAGE — 5 STORAGE SELECT — 6 FUNCTION CONTROL STORAGE — 11 I/O DRIVERS — 21 DISPLAY

2 KEYBOARD MEMORY/CONTROLS — 7 DISPLAY CONTROLS

FIG 4A

START ADDRESS STORAGE

| FUNCTION | | ADDRESS |
|---|---|---|
| 0 | 0 | 6 BIT ADDRESS |
| 0 | 1 | " |
| 1 | 0 | " |
| 1 | 1 | " |

FIG 4B

CHARACTER SEQUENCE STORAGE

| FUNCTION | | ADDRESS |
|---|---|---|
| 0 | 1 | 6 BIT ADDRESS |
| 0 | 0 | f) ADDRESS |
| 0 | 1 | h) ADDRESS |
| 1 | 0 | e) ADDRESS |

1

FIG 2

0 031 446

WHICH | HAVE | WILL | AND | FOR | THE | YOU | ING | IN | OF | FROM | | OULD

Q W E R T Y U I O P | TION ½ ¼ THIS | MENT ] [ WITH

SHIFT LOCK | A S D F G H J K L | ; : THAT

SHIFT | Z X C V B N M | /?

STROKE SAVERS

# FIG 3

FIG 5

## FIG 6A

START
ADDRESS
STORAGE

| FUNCTION | | ADDRESS |
|---|---|---|
| 0 | 0 | 6 BIT ADDRESS |
| 0 | 1 | |
| 1 | 0 | ADDRESS FILE I |
| 1 | 0 | ADDRESS FILE 2 |
| | | |

58
59

## FIG 6B

| | FUNCTION | | ADDRESS |
|---|---|---|---|
| 60 | 0 | 1 | o) ADDRESS |
| 61 | 0 | 0 | f ) ADDRESS |
| 62 | 1 | 1 | |
| 63 | 0 | 1 | i ) ADDRESS |
| 64 | 0 | 0 | n) ADDRESS |
| 65 | 1 | 1 | |
| 66 | 0 | 0 | Sp) ADDRESS |
| 67 | 0 | 1 | t ) ADDRESS |
| 68 | 0 | 0 | h) ADDRESS |
| 69 | 0 | 0 | e) ADDRESS |
| 70 | 1 | 1 | |
| | | | |

CHARACTER
SEQUENCE
STORAGE

## FIG 7

# 0 031 446

FIG 8

**FIG 9**

STROKE SAVER PROCESSING

114 → USING THE START ADDRESS POINTER, RETRIEVE THE CHARACTER DATA STORED IN FIXED MEMORY STORAGE

115 → ENTER THE DATA IN THE NEXT AVAILABLE LOCATION IN THE "CHARACTER/FUNCTION TO BE PROCESSED" MEMORY. PRINTER CONTROL RETRIEVES DATA FROM THIS MEMORY SEQUENTIALLY AND BEGINS NORMAL CHAR./FUNCTION PROCESSING OF THE DATA

116 → IS STOP CODE PRESENT

NO → 117 INCREMENT THE START ADDRESS POINTER

YES → 118 RETURN TO NORMAL KEY ENTRY PROCESSING

INTERFACE 1

2

200 KEY STATE LOGIC

201 SYSTEM TIMING

202 KEY STATE STORAGE

203 WRITE ADDRESS COUNTER

204 READ ADDRESS COUNTER

205 ADDRESS SELECT

206 MEMORY READ / WRITE LOGIC

207 DISPLAY REQUEST LOGIC

ADDRESS TO KEY-STROKE STORAGE 3

R/W

REQUEST

ACKNOWLEDGE

KEY/ ENTERED/ HELD/ RELEASED

TIMING

STORAGE INHIBIT

FROM/TO DISPLAY CONTROL 7

TO/FROM STROKE SAVER CONTROLS 4

**FIG 10**

7

FIG II